(19) **Europäisches Patentamt**
**European Patent Office**
**Office européen des brevets**

(11) **EP 4 685 882 A1**

(12) **EUROPEAN PATENT APPLICATION**
published in accordance with Art. 153(4) EPC

(43) Date of publication:
**28.01.2026 Bulletin 2026/05**

(21) Application number: **23928595.0**

(22) Date of filing: **20.03.2023**

(51) International Patent Classification (IPC):
**H01M 4/587** (2010.01)     **H01M 10/0566** (2010.01)

(52) Cooperative Patent Classification (CPC):
**H01M 4/587; H01M 10/0525;** Y02E 60/10

(86) International application number:
**PCT/JP2023/011025**

(87) International publication number:
**WO 2024/195012 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Resonac Corporation Tokyo 105-7325 (JP)**

(72) Inventor: **HOSHI, Kento Tokyo 105-8518 (JP)**

(74) Representative: **Berggren Oy P.O. Box 16 Fabianinkatu 21 00101 Helsinki (FI)**

(54) **GRAPHITE CARBON MATERIAL FOR LITHIUM-ION SECONDARY BATTERY ANODE, ANODE MATERIAL FOR LITHIUM-ION SECONDARY BATTERY, ANODE FOR LITHIUM-ION SECONDARY BATTERY, AND LITHIUM-ION SECONDARY BATTERY**

(57)     A graphitic carbon material for a negative electrode of a lithium ion secondary battery, in which a crystallite size Lc (002) determined by X-ray diffraction is from 35 nm to 150 nm, and a tap density is 0.90 g/ cm$^3$ or more.

EP 4 685 882 A1

**Description**

Technical field

The present disclosure relates to a graphite carbon material for a negative electrode of a lithium ion secondary battery, a negative electrode material for a lithium ion secondary battery negative electrode material, a negative electrode for a lithium ion secondary battery and a lithium ion secondary battery.

Background Art

In recent years, with the rapid spread of information-related devices and communication devices such as personal computers, video cameras and mobile phones, the development of batteries to be used as power sources for these devices has become important. In addition, the automotive industry and the like are also working on the development of high-output, high-capacity batteries for electric and hybrid vehicles. Among various types of batteries, a lithium ion secondary battery is currently attracting attention because of their high energy density.

The lithium ion secondary battery installed in electric and hybrid electric vehicles is required to be rapid charging and have long-term reliability. In other words, there is a demand for a battery that combine high input power with long life. From the viewpoint of rapid charging, it has been proposed to reduce a particle size of a negative electrode active material to increase the diffusion of lithium ions within the solid. From the viewpoint of long life, a negative electrode active material for a lithium ion secondary battery with a small specific surface area has been proposed. Based on this concept, for example, Patent Document 1 proposes a graphite carbon material for a negative electrode of a lithium ion secondary battery in which a particle size is small to increase the diffusivity of lithium ions within the solid, and a specific surface area is set to be relatively small to reduce side reactions on a surface of the active material.

Related Art Documents

Patent Documents

Patent Document 1: Japanese Patent Application Laid-Open (JP-A) No. 2018-6270

SUMMARY OF INVENTION

Although the above-mentioned Patent Document 1 has excellent initial charge/discharge efficiency, further improvement in long-term reliability is required.

In accordance with this, one aspect of the present disclosure aims to provide a graphite carbon material for a negative electrode of a lithium ion secondary battery, a negative electrode material for a lithium ion secondary battery, a negative electrode for a lithium ion secondary battery, and a lithium ion secondary battery that are capable of achieving excellent input characteristics, high-temperature storage characteristics, and cycle characteristics.

Solution to Problem

Means for solving the above problems include the following embodiments.

<1> A graphitic carbon material for a negative electrode of a lithium ion secondary battery,

in which a crystallite size Lc (002) determined by X-ray diffraction is from 35 nm to 150 nm, and
a tap density is preferably 0.90 $g/cm^3$ or more,.

<2> The graphitic carbon material for a negative electrode of a lithium ion secondary battery according to <1>,
in which, in a particle size distribution measured by a laser diffraction scattering method, in a case in which a volume cumulative distribution curve is drawn from the small diameter side, a particle size (D50) at which a cumulative amount is 50% is from 5 $\mu$m to 30 $\mu$m.

<3> The graphite carbon material for a negative electrode of a lithium ion secondary battery according to <1> or <2>, in which an intensity ratio (Id/Ig) of a maximum peak intensity Id around 1330 $cm^{-1}$ to a maximum peak intensity Ig around 1580 $cm^{-1}$ in laser Raman spectrophotometric measurement is from 0.1 to 0.5.

<4> The graphite carbon material for a negative electrode of a lithium ion secondary battery according to any one of <1> to <3>, in which a specific surface area determined by nitrogen adsorption measurement at 77 K is from 0.7 $m^2/g$ to 8 $m^2/g$.

<5> The graphite carbon material for a negative electrode of a lithium ion secondary battery according to any one of <1> to <4>, in which a crystallite size La (110) determined by X-ray diffraction is from 50 nm to 450 nm.

<6> The graphite carbon material for a negative electrode of a lithium ion secondary battery according to any one of <1> to <5>, in which an oil absorption in a linseed oil absorption measurement is from 30 mL to 75 mL per 100 g of the graphite material.

<7> A negative electrode material for a lithium ion secondary battery, including the graphite carbon material for a negative electrode of a lithium ion secondary battery according to any one of <1> to <6>.

<8> A negative electrode for a lithium ion secondary battery, including:

a graphite carbon material layer including the graphite carbon material for a negative electrode of a lithium ion secondary battery according to any one of <1> to <6>; and
a current collector.

<9> A lithium ion secondary battery, including:

the negative electrode for a lithium ion secondary battery according to <8>;
a positive electrode; and
an electrolyte.

Advantageous Effects of Invention

In one aspect of the present disclosure, it is possible to provide a graphite carbon material for a negative electrode of a lithium ion secondary battery, a negative electrode material for a lithium ion secondary battery, a negative electrode for a lithium ion secondary battery, and a lithium ion secondary battery that are capable of achieving excellent input characteristics, high-temperature storage characteristics, and cycle characteristics.

DESCRIPTION OF EMBODIMENTS

Hereinafter, embodiments in the present invention will be described in detail. However, the present invention is not limited to the following embodiments. In the following embodiments, the components (including element steps, etc.) are not essential unless otherwise specified. The same applies to the numerical values and their ranges, and they do not limit the present invention.

In the present specification, in a case in which a numerical range is indicated using "to", the numerical values before and after "to" are included as the minimum and maximum values, respectively.

In the present invention, in the numerical ranges described in stepwise, the upper limit or lower limit value described in a certain numerical range can also be replaced with the upper limit or lower limit value of another numerical range described in stepwise. In the numerical ranges described in the present disclosure, the upper or lower limit value of the numerical range may be replaced by the value shown in each example.

In the present disclosure, each component in the graphitic carbon material for a negative electrode of a lithium ion secondary battery and in the composition may contain multiple types of the corresponding substance. Hereinafter, "graphitic carbon material for a negative electrode of a lithium ion secondary battery" may be abbreviated as "graphitic carbon material". In a case in which multiple substances corresponding to each component are present in the graphitic carbon material and the composition, a content and amount of each component means a total content and amount of the multiple substances present in the graphitic carbon material and the composition, unless otherwise specified.

In the present disclosure, the graphitic carbon material and the composition may contain multiple types of particles corresponding to each component. In a case in which multiple particles corresponding to each component are present in the graphitic carbon material and the composition, a particle size of each component means a value for a mixture of the multiple types of particles present in the graphitic carbon material and the composition, unless otherwise specified.

In the present disclosure, the term "layer" includes a case where a layer is formed over the entire area when the area in which the layer exists is observed, as well as a case where a layer is formed only in a part of the area.

In the present disclosure, the term "layered" or "laminated" refers to stacking layers, and two or more layers may be bonded, or two or more layers may be detachable.

In the present disclosure, a crystallite size Lc (002) and La (110) determined by X-ray diffraction are determined by the following method using an X-ray diffraction device (XRD).

A measurement sample is prepared by mixing so as to be "graphite powder: Si powder" = 5:1 by mass in an agate mortar for 5 minutes, and an X-ray diffraction peak spectrum is measured under the following measurement conditions. A diffraction peak position is determined by using standard silicon powder (for example, NIST Si 640f manufactured by NIST) as an internal standard. For example, a Smart Lab 3kW manufactured by Rigaku Corporation can be used as the X-ray diffraction device (XRD). Measurement conditions and calculation method are in accordance with JIS R 7651:2007 (Method of lattice parameters and crystallite sizes of carbon materials).

In the present disclosure, a particle size (D50) is a particle size at which a volume cumulative distribution curve is drawn from a small diameter side in a particle size distribution measured using a laser diffraction particle size distribution measuring device, and a cumulative amount is 50%.

An example of the laser diffraction particle size distribution measuring device includes SALD-3000J manufactured by Shimadzu Corporation.

In the present disclosure, a tap density is measured in accordance with JIS R 1628:1997. The tap density may be measured using a packing density measuring device (for example, KRS-406, manufactured by Kuramochi Scientific Instruments Manufacturing Co., Ltd.). 100 mL of a graphite carbon material for a negative electrode of a lithium ion secondary battery is placed in a graduated cylinder, and a density is calculated by tapping (dropping the graduated cylinder from a specified height) until the density is saturated.

In the present disclosure, in laser Raman spectrophotometric measurement, a intensity ratio (Id/Ig, hereinafter also referred to as the "R value") of a maximum peak intensity Id around 1330 $cm^{-1}$ to a maximum peak intensity Ig around 1580 $cm^{-1}$ is determined by the following method using a laser Raman spectrophotometer.

A measurement sample is set flat on a sample plate, and argon laser light is irradiated onto the sample plate, and measurement is performed using a laser Raman spectrophotometer. As a laser Raman spectrophotometer, for example, NRS-1000 manufactured by JASCO Corporation may be used. Measurement conditions are as follows:

Argon laser light wavelength: 532 nm
Wavenumber resolution: 2.56 $cm^{-1}$
Measurement range: from 1180 $cm^{-1}$ to 1730 $cm^{-1}$
Peak research: background removal

A specific surface area determined by nitrogen adsorption measurement at 77K (hereinafter sometimes abbreviated as "specific surface area") is determined by the BET method from an adsorption isotherm obtained from nitrogen adsorption measurement at 77K in accordance with JIS Z 8830:2013. Nitrogen adsorption at liquid nitrogen temperature (77K) is measured by a single-point method using a high-speed specific surface area/pore distribution measurement device (for example, FlowSorb III, manufactured by SHIMADZU CORPORATION), and a specific surface area is calculated by applying the BET method. When measuring the BET specific surface area, it is preferable to perform a pretreatment in advance by heating to remove moisture, since moisture adsorbed on the sample surface and within the structure is thought to affect the gas adsorption capacity.

In the pretreatment, a measurement cell containing 0.05g of measurement sample is depressurized to 10 Pa or less using a vacuum pump, heated to 110°C, held for 3 hours or more, and then naturally cooled to room temperature (25°C) while maintaining the depressurized state. After the pretreatment, measurements are performed with an evaluation temperature set to 77K, and an evaluation pressure range set to less than 1 in relative pressure (equilibrium pressure relative to saturated vapor pressure).

In the present disclosure, an oil absorption per 100 g of graphite material in a linseed oil absorption measurement (hereinafter also referred to as "linseed oil absorption") is measured in accordance with the method described in JIS K6217-4:2008 "Carbo black for rubber industry-Fundamental characteristics-Par 4: Determination of oil absorption number (OAN) and oil absorption number of compressed sample (COAN)", except that a linseed oil (manufactured by Kanto Chemical Co., Ltd.) is used as a reagent liquid instead of dibutyl phthalate (DBP).

A specific method for measuring a linseed oil absorption is as follows. Linseed oil is titrated into a measurement sample using a constant speed burette, and a change in viscosity characteristics is measured using a torque detector. An amount of the reagent liquid added per 100 g of the measurement sample that corresponds to 70% of a maximum torque generated is defined as the linseed oil absorption (mL). An example of a measuring device includes an absorption measuring device manufactured by Asahi souken corporation.

<Graphite carbon material for negative electrode of lithium ion secondary battery>

The graphite carbon material for a negative electrode of a lithium ion secondary battery in the present disclosure has a crystallite size Lc (002) of from 35 nm to 150 nm as determined by X-ray diffraction, and a tap density of 0.90 $g/cm^3$ or more.

By using the graphite carbon material for a negative electrode of a lithium ion secondary battery having the above configuration, the input characteristics, high-temperature storage characteristics, and cycle characteristics are excellent. The reason for this is unclear, but is presumed to be as follows.

By setting the crystallite size Lc (002) in the range of from 35 nm to 150 nm, the input characteristics and cycle characteristics are excellent. Furthermore, by setting the tap density to 0.90 $g/cm^3$ or more, an absorption of a binder into the graphite carbon material is suppressed, and an adhesion of an active material layer containing the graphite carbon material and the binder is improved, resulting in further improvement in high-temperature storage characteristics and cycle characteristics.

Note that, when attempting to obtain a graphite carbon material with a small particle size as in Patent Document 1, the graphite carbon material is crushed strongly, which tends to reduce the yield and productivity.

The crystallite size Lc (002) is preferably 40 nm or more, more preferably 45 nm or more, and even more preferably 60 nm or more. The crystallite size Lc (002) is preferably 140 nm or less, more preferably 130 nm or less, and even more preferably 120 nm or less.

The tap density is 0.90 g/cm$^3$ or more, preferably 0.91 g/cm$^3$ or more, and more preferably 0.92 g/cm$^3$ or more. The tap density may be 1.30 g/cm$^3$ or less, or 1.25 g/cm$^3$ or less.

A particle size (D50) is preferably from 5 μm to 30 μm. In a case in which the particle size (D50) is 30 μm or less, a diffusion distance of lithium from a surface to an inside of the graphite carbon material is suppressed from becoming too long, and the input characteristics of the lithium ion secondary battery tend to be further improved. The particle size (D50) is preferably 25 μm or less, more preferably 20 μm or less, and even more preferably 17 μm or less.

In a case in which the particle size (D50) is 5 μm or more, a pressing pressure required for forming the active material layer can be reduced, and as a result, the input characteristics tend to be more excellent. The particle size (D50) is preferably 5.5 μm or more, more preferably 6.0 μm or more, and even more preferably 6.2 μm or more.

An R value is preferably from 0.10 to 0.50. In a case in which the R value is 0.10 or more, there are sufficient graphite lattice defects that are utilized for the absorption and release of lithium ions, which tends to suppress deterioration of input characteristics. The R value is more preferably 0.15 or more, and even more preferably 0.20 or more.

In a case in which the R value is 0.50 or less, a capacity tends to be excellent. The R value is preferably 0.40 or less, more preferably 0.35 or less, and even more preferably 0.30 or less.

A specific surface area is preferably from 0.7 m$^2$/g to 8 m$^2$/g. In a case in which the specific surface area is within the above range, an excellent balance between input characteristics and life characteristics tends to be obtained.

The specific surface area is more preferably 0.8 m$^2$/g or more, even more preferably 0.9 m$^2$/g or more, and particularly preferably 1.0 m$^2$/g or more. The specific surface area is more preferably 4.0 m$^2$/g or less, even more preferably 3.5 m$^2$/g or less, and particularly preferably 2.5 m$^2$/g or less.

A crystallite size La (110) is preferably from 50 nm to 450 nm. In a case in which the crystallite size La (110) is 50 nm or more, the capacity tends to be excellent. In a case in which the crystallite size La (110) is 450 nm or less, the input tends to be excellent.

The crystallite size La (110) is more preferably 100 nm or more, and even more preferably 150 nm or more. La (110) is more preferably 440 nm or less, and even more preferably 400 nm or less.

A linseed oil absorption is preferably from 30 mL/100 g to 75 mL/100 g. In a case in which the linseed oil absorption is within the above range, it tends to be easy to prepare a slurry for forming an active material layer and to have excellent workability.

The linseed oil absorption is more preferably 70 mL/100 g or less, and even more preferably 65 mL/100 g or less. The linseed oil absorption is more preferably 40 mL/100 g or more.

An average interplanar spacing $d_{002}$ determined by X-ray diffraction is preferably from 0.334 nm to 0.338 nm. In a case in which the average interplanar spacing $d_{002}$ is 0.338 nm or less, the initial charge/discharge efficiency and energy density of a lithium ion secondary battery tend to be excellent.

In this disclosure, the average interplanar spacing $d_{002}$ is calculated using Bragg's formula from a diffraction peak corresponding to a carbon 002 plane that appears at a diffraction angle 2θ = around from 24° to 27° using a diffraction profile obtained by irradiating a sample with X-rays (CuKα rays) and measuring the diffraction rays with a goniometer.

Specifically, the measurement sample is filled into a concave portion of a quartz sample holder and set on the measurement stage, and the measurement is performed under the following measurement conditions using a wide-angle X-ray diffraction device (e.g., manufactured by Rigaku Corporation).

Radiation source: CuKα ray average interplanar spacing (wavelength = 0.15418 nm)

Output: 40 kV, 20 mA
Sampling width: 0.010°
Scanning range: from 10° to 35°
Scanning speed: 0.5°/min.

A graphite carbon material includes a graphite such as an artificial graphite, a natural graphite, a graphitized mesophase carbon, and a graphitized carbon fiber. A shape of the graphite is not particularly limited, and examples of such shapes include flake, sphere, lump, and fiber. From the viewpoint of obtaining a high tap density, a spherical shape is preferable.

The artificial graphite can be obtained by firing a graphitizable aggregate. The graphitizable aggregate may be used singly, or in a combination of two or more kinds thereof. Graphite may be used together with the graphitizable aggregate. Graphite may be used singly, or in a combination of two or more kinds thereof.

The graphitizable aggregate may be, for example, a coke powder, a resin carbide, or the like, and there is no particular restriction as long as it is a powder material that can be graphitized. Among them, the coke powder that is easily graphitized is preferable, and examples thereof include a mosaic coke and a needle coke. From the viewpoint of easily adjusting the crystallite size Lc (002) to a range of from 35 to 150 nm, the mosaic coke is more preferable.

A binder (organic binding agent) may be used together with the graphitizable aggregate. The binder may be used singly, or in a combination of two or more kinds thereof.

The binder (organic binding agent) is not particularly limited as long as it can be graphitized by firing. Examples of the binder include organic materials such as a tar, a pitch, a starch, a thermosetting resin, and a thermoplastic resin.

Other materials may be used together with the graphitizable aggregate. Examples of the other material include a fluidity imparting agent, and a graphitization catalyst. The other material may be used singly or in combination of two or more kinds thereof.

A kind of the fluidity imparting agent is not particularly limited. Specific examples of the fluidity imparting agent include a hydrocarbon such as a liquid paraffin, a paraffin wax, and a polyethylene wax; a fatty acid such as stearic acid, oleic acid, erucic acid, and 12-hydroxystearic acid; a fatty acid metal salt such as zinc stearate, lead stearate, aluminum stearate, calcium stearate, and magnesium stearate; a fatty acid amide such as stearic acid amide, oleic acid amide, erucic acid amide, methylene bisstearic acid amide, and ethylene bisstearic acid amide; a fatty acid ester such as stearic acid monoglyceride, stearyl stearate, and hardened oil; and a higher alcohol such as stearyl alcohol. Among these, a fatty acid is preferred, and stearic acid is more preferred.

A kind of the graphitization catalyst is not particularly limited. Specific examples of the graphitization catalyst include substances that have graphitization catalytic action such as silicon, iron, nickel, titanium, and boron, as well as a carbide, an oxide, and a nitride of these substances.

A shape of the artificial graphite is not particularly limited, and it may be a primary particle or an agglomerated particle. In the case of the agglomerated particle, it may or may not contain a carbon material derived from the binder. It may also be a graphite particle in which multiple flat particles are aggregated or bonded so that their orientation planes (main faces) are non-parallel (hereinafter referred to as a "lump graphite particle"). In the case of the lump graphite particle, "their main faces of multiple flat particles are non-parallel" means that the faces with the largest cross-sectional area (that is, main faces) of the flat graphite particles are not aligned in a certain direction. For the lump graphite particles, reference may be made to Japanese Patent Publications No. 3285520 and No. 3325021.

The shape of the artificial graphite may be confirmed by observation with a scanning electron microscope (SEM).

Before firing for graphitization, a graphitizable aggregate, a binder, and other components such as a graphite may be mixed to be a mixture, which may then be molded into a predetermined shape, or the mixture may be fired in powder form without being molded. From the viewpoint of making the tap density 0.90 g/cm$^3$ or more, it is preferable to crush a molded product after molding and before graphitization, adjust the particle size using a sieve or the like, and then perform graphitization.

A method of forming into a predetermined shape is not particularly limited. Examples of the method include a molding method in which the mixture is placed in a container such as a metal mold and pressurized in one axial direction, a vibration molding method in which the mixture is placed in a container such as a metal mold, a weight is placed on the top, and the metal frame is subjected to vibration and impact to form a mold product, and an extrusion molding method in which the mixture is extruded from a nozzle or the like using a horizontal press to form a mold product. From the viewpoint of improving an efficiency of producing the molded product, extrusion molding is preferred.

A compounding ratio of each material in the mixture is not particularly limited. For example, a content of the binder may be from 0.5 parts by mass to 20 parts by mass, from 1 part by mass to 18 parts by mass, or from 1.2 parts by mass to 15 parts by mass, with respect to 100 parts by mass of a total amount of the graphitizable aggregate and the graphite. The binder may not be used.

For example, a content of the binder in the case of graphitization after molding may be from 1.0 parts by mass to 20 parts by mass, from 1.5 parts by mass to 18 parts by mass, or from 2.0 parts by mass to 15 parts by mass, with respect to 100 parts by mass of a total amount of the graphitizable aggregate and the graphite.

From the viewpoint of keeping the specific surface area of the obtained graphitic carbon material low, a content of the binder may be from 1.0 parts by mass to 14 parts by mass, from 1.2 parts by mass to 12 parts by mass, or from 1.5 parts by mass to 10 parts by mass, with respect to 100 parts by mass of a total amount of the graphitizable aggregate and the graphite.

From the viewpoint of easily molding, the mixture preferably contains a fluidity imparting agent. In particular, in a case in which the mixture is molded by extrusion molding, the mixture is molded while being fluidized, therefore, it is preferable to add a fluidity imparting agent.

In a case in which the mixture contains a fluidity imparting agent, a content thereof is not particularly limited. For example, the content of the fluidity imparting agent may be from 0.1% by mass to 20% by mass, from 0.5% by mass to 10% by mass, or from 0.5% by mass to 5% by mass with respect to the entire mixture. The mixture may not contain the fluidity imparting agent.

In a case in which the mixture contains the graphitization catalyst, a content thereof is not particularly limited. For example, the content of the graphitization catalyst may be from 0.1 mass% to 50 mass%, from 0.5 mass% to 40 mass%, or from 0.5 mass% to 30 mass% with respect to the entire mixture. The mixture may not contain the graphitization catalyst.

The firing is preferably carried out under conditions in which the mixture is unlikely to be oxidized, for example, in a nitrogen atmosphere, an argon gas atmosphere, or in a vacuum. A graphitization temperature is preferably 2000°C or higher, more preferably 2500°C or higher, and even more preferably from 2800°C to 3200°C.

In a case in which the graphitization temperature is 2000°C or higher, the graphite crystals tend to grow well and the discharge capacity tends to improve. In a case in which the graphitization temperature is 3200°C or lower, it tends to be easier to adjust the crystallite size Lc (002) to the range of from 35nm to 150nm.

The graphitic carbon material obtained is preferably pulverized to a desired volume average particle diameter. There is no particular restriction on the method for pulverizing the graphitized material, and known methods such as a jet mill, a vibration mill, a pin mill, and a hammer mill may be applied.

At least a part of a surface of the graphitic carbon material obtained may be covered with an amorphous carbon. The amorphous carbon is preferably at least one selected from the group consisting of a carbonaceous substance and a carbonaceous particle (hereinafter also referred to as a precursor of amorphous carbon), which are obtained from organic compound that can be changed into a carbonaceous material by heat treatment.

The precursor of amorphous carbon is not particularly limitted, and examples thereof include a pitch and an organic polymer compound. Examples of the pitch include an ethylene heavy end pitch, a crude oil pitch, a coal tar pitch, an asphalt decomposition pitch, a pitch produced by pyrolyzing a polyvinyl chloride or the like, and a pitch produced by polymerizing naphthalene or the like in the presence of a super strong acid. Examples of the organic polymer compound include a thermoplastic resin such as a polyvinyl chloride, a polyvinyl alcohol, a polyvinyl acetate, and a polyvinyl butyral, and a natural substance such as a starch and a cellulose.

The carbonaceous particles used as amorphous carbon is not particularly limited, and examples thereof include a particle of an acetylene black, an oil furnace black, a ketjen black, a channel black, a thermal black, and a soil graphite.

A method for coating with the amorphous carbon includes, for example, a method of heat treating a mixture containing the graphitic carbon material and the precursor of amorphous carbon. From the viewpoint of improving the input characteristics of the lithium ion secondary battery, a temperature at which the mixture is heat-treated is preferably from 800 °C to 1500 °C, more preferably from 900 °C to 1300 °C, and even more preferably from 1050 °C to 1250 °C. The temperature at which the mixture is heat-treated may be constant from the start to the end of the heat treatment, or may vary.

<Negative electrode material for lithium ion secondary batteries>

A negative electrode material for lithium ion secondary batteries (hereinafter sometimes abbreviated as "negative electrode material") in the present disclosure includes the graphitic carbon material for a negative electrode of a lithium ion secondary battery in the present disclosure. The graphitic carbon material in the present disclosure can be suitably used as a negative electrode active material for a lithium ion secondary battery.

As the negative electrode active material, the graphitic carbon material in the present disclosure may be used singly or in combination with other negative electrode active material. The other negative electrode active material is not particularly limited, and examples thereof include an artificial graphite, an amorphous carbon, a carbon black, a fibrous carbon, and a nanocarbon, which are other than the graphitic carbon material in the present disclosure. The other carbon material may be used singly, or in a combination of two or more kinds thereof.

The negative electrode active material may also include a particle containing an element other than a carbon material that can occlude and release lithium ions. The element that can occlude and release lithium ions are not particularly limited, and examples thereof include Si, Sn, Ge, and In.

A content of the graphite carbon material in the present disclosure with respect to the negative electrode active material is not particularly limited, and is preferably 50% by mass or more, more preferably 80% by mass or more, even more preferably 90% by mass or more, and particularly preferably 100% by mass.

<Negative electrode for lithium ion secondary battery>

A negative electrode for a lithium ion secondary battery in the present disclosure includes a graphite carbon material layer containing the graphite carbon material for a lithium ion secondary battery in the present disclosure; and a current collector. The negative electrode for a lithium ion secondary battery may include other component as necessary, in addition to the graphite carbon material layer containing the graphite carbon material in the present disclosure and the current collector.

The negative electrode for a lithium ion secondary battery can be produced, for example, by kneading the graphite carbon material and a binder with a solvent to prepare a graphite carbon material composition in a slurry form,

EP 4 685 882 A1

which is then applied to a current collector to form a graphite carbon material layer, or by forming the graphite carbon material composition into a sheet or pellet shape or the like, which is then integrated with a current collector. Kneading can be performed using a dispersion device such as a stirrer, a ball mill, a super sand mill, or a pressure kneader.

The binder used in preparing the graphite carbon material composition is not particularly limited. Examples of the binder include a styrene-butadiene copolymer; a polymer of an ethylenically unsaturated carboxylic acid ester such as methyl acrylate, methyl methacrylate, ethyl acrylate, ethyl methacrylate, butyl acrylate, butyl methacrylate, acrylonitrile, methacrylonitrile, hydroxyethyl acrylate, and hydroxyethyl methacrylate; a polymer of an ethylenically unsaturated carboxylic acid such as acrylic acid, methacrylic acid, itaconic acid, fumaric acid, and maleic acid; and a polymeric compound with high ionic conductivity such as polyvinylidene fluoride, polyethylene oxide, polyepichlorohydrin, polyphosphazene, and polyacrylonitrile. In a case in which the graphite carbon material composition contains a binder, a content of the binder is not particularly limited. The content of the binder may be, for example, from 0.5 parts by mass to 20 parts by mass with respect to 100 parts by mass of a total of the graphite carbon material and the binder.

A solvent is not particularly limited as long as it can dissolve or disperse the binder. Specific examples of the solvent include an organic solvent such as N-methyl-2-pyrrolidone, N,N-dimethylacetamide, N,N-dimethylformamide, and $\gamma$-butyrolactone; and water. A content of the solvent used is not particularly limited as long as it can make the graphite carbon material composition into a desired state such as a paste. The content of the solvent used is preferably, for example, 60 parts by mass or more and less than 150 parts by mass with respect to 100 parts by mass of the graphite carbon material.

The graphite carbon material composition may contain a thickener. Examples of the thickener include carboxymethylcellulose or a salt thereof, methylcellulose, hydroxymethylcellulose, hydroxyethylcellulose, ethylcellulose, polyvinyl alcohol, polyacrylic acid or a salt thereof, alginic acid or a salt thereof, oxidized starch, phosphated starch, and casein. In a case in which the graphite carbon material composition contains the thickener, a content thereof is not particularly limited. The content of the thickener may be, for example, from 0.1 parts by mass to 5 parts by mass with respect to 100 parts by mass of the graphite carbon material.

The graphite carbon material composition may contain a conductive auxiliary. Examples of the conductive auxiliary include a carbon material such as artificial graphite and carbon black (acetylene black, thermal black, furnace black, or the like); an oxide that exhibits electrical conductivity; and a nitride that exhibits electrical conductivity. In a case in which the graphite carbon material composition contains the conductive auxiliary, a content is not particularly limited. The content of the conductive auxiliary may be, for example, from 0.5 parts by mass to 15 parts by mass with respect to 100 parts by mass of the graphite carbon material.

A material of the current collector is not particularly limited and can be selected from aluminum, copper, nickel, titanium, stainless steel, or the like. A shape of the current collector is not particularly limited and can be selected from foil, perforated foil, mesh, or the like. In addition, a porous material such as a porous metal (foamed metal) and carbon paper may also be used as the current collector.

In a case in which the graphite carbon material composition is applied to the current collector to form the graphite carbon material layer, a specific method is not particularly limited, and a known method such as a metal mask printing, an electrostatic painting, a dip coating, a spray coating, a roll coating, a doctor blade, a comma coating, a gravure coating, and a screen printing can be used. After the graphite carbon material composition is applied to the current collector, a solvent contained in the graphite carbon material composition is removed by drying. The drying may be performed, for example, using a hot air dryer, an infrared dryer, or a combination of these devices. If necessary, a rolling process may be performed. The rolling process may be performed by a method such as a flat plate press or a calendar roll.

In a case in which the graphite carbon material composition molded into a shape such as a sheet or pellet is integrated with the current collector to form the graphite carbon material layer, the integration method is not particularly limited. For example, the integration can be performed by a roll, a flat plate press, or a combination of these means. A pressure during integration is preferably, for example, from 1 MPa to 200 MPa.

<Lithium ion secondary battery>

A lithium ion secondary battery in the present disclosure includes the negative electrode for a lithium ion secondary battery in the present disclosure (hereinafter also simply referred to as the "negative electrode"); a positive electrode; and an electrolyte.

The positive electrode can be obtained by forming a positive electrode material layer on a current collector in the same manner as the above-mentioned method of producing a negative electrode. As the current collector, a metal or alloy of aluminum, titanium, stainless steel, or the like in a foil, perforated foil, mesh, or other form may be used.

A positive electrode material used to form a positive electrode material layer is not particularly limited. Examples thereof include a metal compound (metal oxides, metal sulfides, or the like) that can dope or intercalate lithium ions, and a conductive polymer material. More specific examples thereof include lithium cobalt oxide ($LiCoO_2$), lithium nickel oxide ($LiNiO_2$), lithium manganese oxide ($LiMnO_2$), a their composite oxide ($LiCo_xNi_yMn_zO_2$, x+y+z=1), a composite oxide containing an additional element M' (LiCo$_a$Ni$_b$Mn$_c$M'$_d$O$_2$, a+b+c+d=1, M': Al, Mg, Ti, Zr, or Ge), spinel-type lithium manganese oxide (LiMn$_2$O$_4$), a lithium vanadium compound, V$_2$O$_5$, V$_6$O$_{13}$, VO$_2$, MnO$_2$, TiO$_2$, MoV$_2$O$_8$, TiS$_2$, V$_2$S$_5$, VS$_2$, MoS$_2$, MoS$_3$, Cr$_3$O$_8$, Cr$_2$O$_5$, a lithium-containing compound such as olivine-type LiMPO$_4$ (M: Co, Ni, Mn, Fe), a conductive polymer such as polyacetylene, polyaniline, polypyrrole, polythiophene, and polyacened, and a porous carbon. The positive electrode material may be used singly, or in a combination of two or more kinds thereof.

An electrolyte is not particularly limited, and for example, a solution in which a lithium salt is dissolved as an electrolyte in a non-aqueous solvent (a so-called an organic electrolyte) may be used.

Examples of lithium salts include LiClO$_4$, LiPF$_6$, LiAsF$_6$, LiBF$_4$, and LiSO$_3$CF$_3$. The lithium salt may be used singly, or in a combination of two or more kinds thereof.

Examples of a non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propane sultone, 3-methylsulfolane, 2,4-dimethylsulfolane, 3-methyl-1,3-oxazolidin-2-one, $\gamma$-butyrolactone, di-methyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. The non-aqueous solvent may be used singly, or in a combination of two or more kinds thereof.

A shape of the positive and negative electrodes in a lithium ion secondary battery is not particularly limited. For example, the positive and negative electrodes, and a separator placed between the positive electrode and the negative electrode as necessary, may be wound in a spiral shape, or may be layered in a flat plate shape.

The separator is not particularly limited, and for example, a resin nonwoven fabric, a cloth, a microporous film, or a combination of these may be used. Examples of the resin include those containing a polyolefin such as polyethylene and polypropylene as the main component. In a case in which a structure of the lithium ion secondary battery does not allow the positive and negative electrodes to come into direct contact, the use of a separator is not essential.

A shape of the lithium ion secondary battery is not particularly limited. Examples thereof include a laminated battery, a paper battery, a button battery, a coin battery, a laminated battery, a cylindrical battery, and a square battery.

The lithium ion secondary battery in the present disclosure has excellent in output characteristics, and therefore it is suitable as a large-capacity lithium ion secondary battery for use in electric vehicles, power tools, power storage devices, or the like. In particular, it is suitable as a lithium ion secondary battery for use in electric vehicles (EVs), hybrid electric vehicles (HEVs), plug-in hybrid electric vehicles (PHEVs), or the like, which require high-current charging and discharging to improve acceleration performance and brake regeneration performance.

EXAMPLE

The present disclosure will be described in detail below by the following examples, but the present disclosure is not limited to these examples.

A particle size (D50) was measured by the following method. The crystallite size Lc (002), crystallite size La (110), R value, specific surface area, linseed oil absorption, and tap density were measured by the above-mentioned methods.

[Particle size measurement]

A sample of a graphitic carbon material was dispersed in purified water together with 0.2% by mass of a surfactant (product name: Liponol T/15, manufactured by Lion Corporation) to prepare a solution and placed in a water tank for the sample in a laser diffraction particle size distribution analyzer (SALD-3000J, manufactured by Shimadzu Corporation). Next, the solution was circulated by a pump while applying ultrasonic waves (pump flow rate was 65% from the maximum value), and a volume-based particle size distribution was measured by adjusting an amount of water so that the absorbance was from 0.10 to 0.15.

In the cumulative volume distribution (%), the particle size D50 ($\mu$m) (average particle diameter) at 50% from the smallest size was obtained.

[Example 1]

(Production of graphitic carbon material)

Semi-needle coke (coke A) was roughly crushed and then finely ground in a jet mill to a particle size (D50) of 16 $\mu$m. The finely grounded coke was heat-treated in a nitrogen atmosphere at a maximum temperature of 1000°C for 1 hour, and then baked at 3000°C for 1 hour to graphitize the graphitizable components. The obtained graphitic carbon material was crushed with a cutter mill and then classified to obtain graphitic carbon material A. A particle size (D50) of graphite carbon material A was 15 $\mu$m.

The physical properties of the graphite carbon material prepared were measured. These properties are shown in Table 1.

(Production of negative electrode)

A solution of CMC (carboxymethylcellulose, Daicel FineChem Ltd., product number 2200) as a thickener (CMC concentration: 1.5 mass%) was added to 97 mass parts of graphite carbon material A so that a solid content of CMC was 1.5 mass parts, and the mixture was kneaded for 10 minutes. Next, purified water was added so that a total solid content of the negative electrode material and CMC was from 40 mass% to 50 mass%, and the mixture was kneaded for 10 minutes. Next, an aqueous dispersion of SBR (BM400-B, Zeon Corporation) which is a styrene butadiene copolymer rubber (SBR concentration: 40 mass%) was added as a binder so that a solid content of SBR was 1.5 mass parts, and the mixture was mixed for 10 minutes to prepare a paste-like negative electrode material composition. Next, the negative electrode material composition was applied to an electrolytic copper foil with a thickness of 11 $\mu$m, using a comma coater with an adjusted clearance so that a coating amount per unit area was 10.0 mg/cm$^2$, thereby forming a negative electrode material layer. After that, an electrode density was adjusted to 1.6 g/cm$^3$ using a roll press.

(Production of coin-type cell)

An electrolytic copper foil on which the negative electrode material layer was formed was punched out into a disk shape with a diameter of 14 mm to prepare a sample electrode (negative electrode) for a coin-type cell. The prepared sample electrode (negative electrode), a separator, and a counter electrode (metallic lithium) were placed in a coin-type battery container in this order, and an electrolyte was injected to produce a coin-type lithium ion secondary battery. The electrolyte used was a mixed solvent of ethylene carbonate (EC) and ethyl methyl carbonate (EMC) (volume ratio of EC to EMC:3:7), to which 0.5% by mass of vinylene carbonate (VC) was added with respect to a total amount of the mixed solution, and LiPF$_6$ was dissolved to a concentration of 1 mol/L. A polyethylene microporous membrane with a thickness of 20 $\mu$m was used as the separator. An initial charge/discharge characteristics of the produced lithium ion secondary battery were evaluated using the method described below.

The coin-type battery was produced in a glove box in an Ar atmosphere with an dew point temperature of -70°C and an oxygen concentration of less than 10 ppm.

(Measurement of specific discharge capacity)

The coin-shaped cell thus produced was left in a thermostatic chamber at 25°C for 3 hours, after which it was subjected to constant current charging (CC charging) at a current value equivalent to 0.2C until the voltage reached 0V (Li/Li$^+$), and then constant voltage charging (CV charging) until the current value reached 0.02C. After a 15-minute pause, it was CC discharged at a current value equivalent to 0.2C until the voltage reached 1.5V. An amount of electricity at that time was divided by a mass of the active material of the electrode (a mass of only the graphite material) to calculate a specific discharge capacity.

Specific discharge capacity (mAh/g) = amount of discharged electricity (mAh) ÷ mass of active material (g)

(Laminated cell fabrication)

The negative electrode produced above were punched out so that a coated surface was 4cm × 5cm in size, a tab (uncoated part) was 1cm × 1.5cm in size, and the positive electrodes were punched out so as to be 3.99cm × 4.99cm in size. For the tab part, a nickel lead tab with a sealant was joined to the negative electrode by ultrasonic welding, and an aluminum lead tab with a sealant was joined to the positive electrode by ultrasonic welding. The negative electrode was wrapped once with a separator, and a collector side was heat welded.

An aluminum laminate sheet measuring 12cm wide × 10cm long was folded in half horizontally, and the separator-wrapped negative electrode were placed in the area where the sealant part and the edge of the aluminum laminate seal overlapped, and the lower part of the sealant and the aluminum laminate seal part were fixed with polyimide tape. Next, the positive electrode was placed so as to overlap the negative electrode coating surface, and similarly fixed with polyimide tape. The overlapping part (upper part) and a side of the aluminum laminate sheet and the sealant part were welded by a heat welding machine. After vacuum drying for 12 hours at 60°C in a vacuum dryer, the electrolyte was poured from the bottom, and the lower part was heat-welded by vacuuming with a vacuum heat welding machine. The electrolyte used was a mixed solvent of ethylene carbonate (EC) and ethyl methyl carbonate (EMC) (volume ratio of EC to EMC is 3:7), to which 0.5 mass% of vinylene carbonate (VC) was added with respect to a total amount of the mixed solution, and LiPF$_6$ was dissolved to a concentration of 1 mol/L. A polyethylene microporous membrane with a thickness of 20 $\mu$m was used as

the separator.

The laminated battery was produced in a dry room with a dew point temperature of -50°C.

(Aging treatment)

The laminated cell produced was left in a thermostatic chamber at 25°C for 12 hours, after which it was charged at a constant current (CC) to 4.2V at a current value equivalent to 0.2CA, and then charged at a constant voltage (CV) to a current value equivalent to 0.02CA. It was then CC discharged to 2.7V at a current value equivalent to 0.2CA. This constitutes one cycle, and after three cycles were repeated, it was again CC-CV charged to 4.2V (CC: equivalent to 0.2CA, CV: equivalent to 0.02CA), and left in a thermostatic chamber set at 60°C for 12 hours. It was then discharged to 2.7V at a current value equivalent to 0.2CA for aging treatment. A rest period of 15 minutes was provided between charging and discharging.

(Input characteristics)

The input characteristics were determined by leaving the aged battery in a thermostatic chamber set at 25°C for 1 hour, adjusting the state of charge (SOC) to 50%, and then charging it at current values equivalent to 0.2C, 1C, 3C, and 5C for 10 seconds each, and calculating a difference in voltage change at that time and a slope of each current value as the direct current internal resistance (DC-IR). A 15-minute rest period was provided between measurements at each current value.

The SOC can be adjusted by separately calculating an open circuit voltage for each SOC and performing CC-CV charging (CC: equivalent to 0.2A, CV: equivalent to 0.02C) up to that voltage.

(Cycle characteristics)

After placing the aged battery in a thermostatic chamber set at 25°C for 1 hour, it was charged at a constant current (CC) to 4.2V at a current value equivalent to 0.2C, and then charged at a constant voltage (CV) until the current value reached 0.02C. It was then CC-discharged to 2.7V at a current value equivalent to 0.2C. A discharge capacity at this time was taken as an initial discharge capacity. A current value was then changed to 1C, and the battery was charged at a constant current to 4.2V, and then charged at a constant voltage until the current value reached 0.02C. It was then discharged at a current value equivalent to 1C until the voltage reached 2.7V. This operation was repeated 100 times, after which it was charged at a constant current (CC) to 4.2V at a current value equivalent to 0.2C, and then charged at a constant voltage (CV) until the current value reached 0.02C. It was then CC-discharged to 2.7V at a current value equivalent to 0.2C. A discharge capacity at this time was taken as a post-cycle discharge capacity.

The cycle characteristics were calculated using the following formula:

Cycle characteristics (%) = post-cycle discharge capacity (mAh) / initial discharge capacity (mAh) $\times$ 100

(Expansion rate)

An expansion rate was calculated from the following formula by measuring a thickness after initial discharge and a thickness after 100 cycles of discharge for the laminated cell.

Expansion rate (%) = thickness after 100 cycles of discharge (mm) / thickness after initial discharge (mm) $\times$ 100

(Storage characteristics)

The aged battery was left in a thermostatic chamber set at 25°C for 1 hour, then constant-current charged (CC charged) to 4.2V at a current value equivalent to 0.2C, and then constant-voltage charged (CV charged) to a current value equivalent to 0.02C. It was then CC-discharged to 2.7V at a current value equivalent to 0.2C. A discharge capacity at this time was taken as a initial discharge capacity.

Then, the thermostatic chamber was changed to 60°C and the battery was left in it for 10 days. After 10 days, the thermostatic chamber was set to 25°C, and the battery was left in it for 3 hours, after which it was discharged to 2.7V at a current value equivalent to 0.2C. Next, the battery was charged at a constant current (CC) up to 4.2 V at a current value equivalent to 0.2 C, and then charged at a constant voltage (CV) up to a current value equivalent to 0.02 C. The battery was then discharged at a CC to 2.7 V at a current value equivalent to 0.2 C. A capacity at this time was taken as a discharge capacity after storage.

The high-temperature storage characteristics were calculated using the following formula.

High-temperature storage characteristics (%) = discharge capacity after storage (mAh) / initial discharge capacity (mAh) $\times$ 100

[Examples 2 to 6]

Graphite carbon materials B to F were obtained in the same manner as graphite carbon material A in Example 1, except that coke B (mosaic coke), coke C (mosaic coke), coke D (semi-needle coke), coke E (super needle coke), or coke F (mosaic coke) were used instead of coke A in Example 1. Batteries were produced using these graphite carbon materials B to F in the same manner as Example 1, and battery evaluation was performed.

[Example 7]

Graphite carbon material A2 was obtained in the same manner as in Example 1, except that the particle size (D50) of graphite carbon material A was 9 $\mu$m. A battery was produced using the graphite carbon material A2 in the same manner as in Example 1, and the battery was evaluated.

[Example 8]

Graphite carbon material A3 was obtained in the same manner as in Example 1, except that the particle size (D50) of graphite carbon material A was 30 $\mu$m. A battery was produced using the graphite carbon material A3 in the same manner as in Example 1, and the battery was evaluated.

[Example 9]

After obtaining graphite material A in Example 1, 5 parts by mass of coal tar pitch was mixed with 100 parts by mass of graphite material A, and the mixture was heated to 1000°C at a heating rate of 200°C/h, held for 1 hour, and fired. The firing was performed in a nitrogen atmosphere. After cooling to room temperature (25°C), the fired sample was crushed to 15 $\mu$m using a cutter mill and then sieved through a sieve with 0.109 mm mesh to obtain a graphite carbon material AC1. A battery was produced using the graphite carbon material AC1 in the same manner as in Example 1, and a battery evaluation was performed.

[Comparative Example 1]

Graphite carbon material G was obtained in the same manner as in Example 1, except that the type of coke was changed to coke G, which is super needle coke. A battery was produced using the graphite carbon material G in the same manner as in Example 1, and a battery evaluation was performed.

[Comparative Example 2]

Graphite carbon material H was obtained in the same manner as in Example 1, except that the type of coke was changed to coke H, which is mosaic coke. A battery was produced using the graphite carbon material H in the same manner as in Example 1, and the battery was evaluated.

[Comparative Example 3]

Graphite carbon material B2 was obtained in the same manner as in Example 1, except that coke B (mosaic coke) was used in Example 1, the particle size (D50) was finely pulverized to 5.5 $\mu$m, heat-treated at a maximum temperature of 1300°C, and then fired at 2800°C, and no particle size separation was performed after firing. A battery was produced using the graphite carbon material B2 in the same manner as in Example 1, and the battery was evaluated.

[Table 1]

| | Coke | Crystallite size Lc (002) | Tap density | R value | Crystallite size La (110) | Average particle diameter (D50) | Specific surface area | Amount of Oil absorption |
|---|---|---|---|---|---|---|---|---|
| | | [nm] | [g/cm$^3$] | | [nm] | [$\mu$m] | [m$^2$/g] | [mL/100g] |
| Example 1 | A | 101 | 0.92 | 0.20 | 360 | 15 | 1.7 | 62 |

(continued)

| | Coke | Crystallite size Lc (002) | Tap density | R value | Crystallite size La (110) | Average particle diameter (D50) | Specific surface area | Amount of Oil absorption |
|---|---|---|---|---|---|---|---|---|
| | | [nm] | [g/cm$^3$] | | [nm] | [μm] | [m$^2$/g] | [mL/100g] |
| Example 2 | B | 74 | 0.92 | 0.20 | 355 | 15 | 1.8 | 62 |
| Example 3 | C | 50 | 0.93 | 0.20 | 223 | 15 | 1.7 | 60 |
| Example 4 | D | 120 | 0.93 | 0.20 | 330 | 15 | 1.7 | 59 |
| Example 5 | E | 150 | 0.93 | 0.20 | 450 | 15 | 1.7 | 60 |
| Example 6 | F | 40 | 0.93 | 0.20 | 220 | 15 | 1.8 | 60 |
| Example 7 | A2 | 101 | 0.92 | 0.20 | 360 | 9 | 2.7 | 62 |
| Example 8 | A3 | 101 | 0.93 | 0.20 | 360 | 30 | 1.4 | 59 |
| Example 9 | A | 101 | 0.93 | 0.35 | 360 | 15 | 1.2 | 61 |
| Comparative Example 1 | G | 170 | 0.93 | 0.20 | 490 | 15 | 1.7 | 60 |
| Comparative Example 2 | H | 30 | 0.93 | 0.20 | 210 | 15 | 1.7 | 61 |
| Comparative Example 3 | B2 | 72.4 | 0.87 | 0.20 | 330 | 4 | 3.4 | 77 |

[Table 2]

| | Specific discharge capacity | Input characteristics | Cycle characteristics | Expansion rate | High-temperature storage characteristics |
|---|---|---|---|---|---|
| | [mAh/g] | [Ω] | [%] | [%] | [%] |
| Example 1 | 344 | 1.84 | 95 | 6.2 | 96 |
| Example 2 | 341 | 1.76 | 96 | 4.8 | 96 |
| Example 3 | 335 | 1.71 | 96 | 4.5 | 96 |
| Example 4 | 347 | 1.90 | 94 | 6.4 | 96 |
| Example 5 | 348 | 1.96 | 93 | 6.5 | 95 |
| Example 6 | 325 | 1.68 | 96 | 4.3 | 94 |
| Example 7 | 342 | 1.74 | 94 | 6.1 | 94 |
| Example 8 | 345 | 1.89 | 96 | 6.4 | 97 |
| Example 9 | 344 | 1.75 | 95 | 6.2 | 93 |
| Comparative Example 1 | 349 | 2.04 | 92 | 7.1 | 96 |
| Comparative Example 2 | 310 | 1.68 | 96 | 4.3 | 92 |
| Comparative Example 3 | 330 | 1.75 | 96 | 4.7 | 85 |

As shown in the results in Table 2, the lithium ion secondary battery produced using the negative electrode material in the Examples had superior input characteristics, high-temperature storage characteristics, and cycle characteristics compared to the lithium ion secondary battery produced using the negative electrode material of the Comparative Examples. As for other items, it is seen that the Examples exhibit properties equivalent to or superior to those of the Comparative Examples.

**Claims**

1. A graphitic carbon material for a negative electrode of a lithium ion secondary battery,

   wherein a crystallite size Lc (002) determined by X-ray diffraction is from 35 nm to 150 nm, and
   a tap density is 0.90 g/ cm$^3$ or more.

2. The graphitic carbon material for a negative electrode of a lithium ion secondary battery according to claim 1, wherein, in a particle size distribution measured by a laser diffraction scattering method, in a case in which a volume cumulative distribution curve is drawn from the small diameter side, a particle size (D50) at which a cumulative amount is 50% is from 5 $\mu$m to 30 $\mu$m.

3. The graphite carbon material for a negative electrode of a lithium ion secondary battery according to claim 1 or claim 2, wherein an intensity ratio (Id/Ig) of a maximum peak intensity Id around 1330 cm$^{-1}$ to a maximum peak intensity Ig around 1580 cm$^{-1}$ in laser Raman spectrophotometric measurement is from 0.1 to 0.5.

4. The graphite carbon material for a negative electrode of a lithium ion secondary battery according to any one of claims 1 to 3, wherein a specific surface area determined by nitrogen adsorption measurement at 77 K is from 0.7 m$^2$/g to 8 m$^2$/g.

5. The graphite carbon material for a negative electrode of a lithium ion secondary battery according to any one of claims 1 to 4, wherein a crystallite size La (110) determined by X-ray diffraction is from 50 nm to 450 nm.

6. The graphite carbon material for a negative electrode of a lithium ion secondary battery according to any one of claims 1 to 5, wherein an oil absorption in a linseed oil absorption measurement is from 30 mL to 75 mL per 100 g of the graphite material.

7. A negative electrode material for a lithium ion secondary battery, comprising the graphite carbon material for a negative electrode of a lithium ion secondary battery according to any one of claims 1 to 6.

8. A negative electrode for a lithium ion secondary battery, comprising:

   a graphite carbon material layer comprising the graphite carbon material for a negative electrode of a lithium ion secondary battery according to any one of claims 1 to 6; and
   a current collector.

9. A lithium ion secondary battery, comprising:

   the negative electrode for a lithium ion secondary battery according to claim 8;
   a positive electrode; and
   an electrolyte.

## INTERNATIONAL SEARCH REPORT

| International application No. |
| --- |
| **PCT/JP2023/011025** |

| | |
| --- | --- |
| **A.** | **CLASSIFICATION OF SUBJECT MATTER** |

*H01M 4/587*(2010.01)i; *H01M 10/0566*(2010.01)i
FI:    H01M4/587; H01M10/0566

According to International Patent Classification (IPC) or to both national classification and IPC

| | |
| --- | --- |
| **B.** | **FIELDS SEARCHED** |

Minimum documentation searched (classification system followed by classification symbols)

H01M4/587; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2021-68491 A (SHOWA DENKO K.K.) 30 April 2021 (2021-04-30) claims, examples 7, 8 | 1-4, 7-9 |
| Y | | 3, 5-6 |
| X | JP 2011-238622 A (MITSUBISHI CHEMICAL CORPORATION) 24 November 2011 (2011-11-24) claim 1, paragraphs [0009]-[0041], example 1 | 1-2, 4, 7-9 |
| Y | | 3, 5-6 |
| Y | JP 2020-177932 A (HITACHI CHEMICAL CO., LTD.) 29 October 2020 (2020-10-29) claims 1, 6, 9, paragraphs [0035]-[0063] | 3, 5 |
| Y | JP 2011-82054 A (OSAKA GAS CHEMICALS CO., LTD.) 21 April 2011 (2011-04-21) paragraph [0043] | 6 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2023** | **20 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/011025**

| Patent document cited in search report | | | Publication date (day/month/year) | Patent family member(s) | | | Publication date (day/month/year) |
|---|---|---|---|---|---|---|---|
| JP | 2021-68491 | A | 30 April 2021 | WO | 2019/151201 | A1 | |
| | | | | claims, examples 7, 8 | | | |
| | | | | TW | 201940424 | A | |
| JP | 2011-238622 | A | 24 November 2011 | US | 2008/0199777 | A1 | |
| | | | | claim 1, paragraphs [0024]-[0074], example 1 | | | |
| | | | | WO | 2006/025376 | A1 | |
| | | | | EP | 1798790 | A1 | |
| | | | | KR | 10-2007-0072512 | A | |
| | | | | CN | 101053098 | A | |
| JP | 2020-177932 | A | 29 October 2020 | US | 2021/0135220 | A1 | |
| | | | | claims 1, 6, 9, paragraphs [0073]-[0116] | | | |
| | | | | WO | 2018/207333 | A1 | |
| | | | | TW | 201902013 | A | |
| | | | | CN | 110612626 | A | |
| | | | | KR | 10-2019-0141172 | A | |
| JP | 2011-82054 | A | 21 April 2011 | (Family: none) | | | |

Form PCT/ISA/210 (patent family annex) (January 2015)

**EP 4 685 882 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018006270 A
- JP 3285520 B
- JP 3325021 B